# EUROPÄISCHE PATENTSCHRIFT

(11) **EP 2 655 805 B1**
(45) Veröffentlichungstag und Bekanntmachung des Hinweises auf die Patenterteilung: **09.09.2020**
(21) Anmeldenummer: 11802935.4
(22) Anmeldetag: 21.12.2011
(51) Int. Cl.: F01D 21/04, F02C 6/12, F04D 29/42

(54) **BERSTSCHUTZ IM VERDICHTERGEHÄUSE EINES ABGASTURBOLADERS**
BURST PROTECTION IN THE COMPRESSOR HOUSING OF AN EXHAUST GAS TURBOCHARGER
PROTECTION CONTRE L'ÉCLATEMENT DANS LE BOÎTIER DE COMPRESSEUR D'UN TURBOCOMPRESSEUR DE SURALIMENTATION

(30) Priorität: 23.12.2010 DE 102010064025
(43) Veröffentlichungstag der Anmeldung: 30.10.2013
(73) Patentinhaber: ABB Schweiz AG, 5400 Baden (CH)
(72) Erfinder: SCHELLENBERG, Peter, 5415 Nussbaumen (CH); SCHMID, Armin, 5200 Brugg (CH); OESCHGER, Daniel, 5430 Wettingen (CH); WIDMER, Moritz, 5504 Otmarsingen (CH)
(74) Vertreter: Zimmermann & Partner Patentanwälte mbB
(86) Internationale Anmeldenummer: PCT/EP2011/073562
(87) Internationale Veröffentlichungsnummer: WO 2012/085065

(56) Entgegenhaltungen:
- EP-A1- 0 816 640
- EP-A1- 1 383 987
- EP-A1- 2 216 517
- US-A- 5 618 162
- US-B1- 6 575 694

## Beschreibung

### Technisches Gebiet

Die Erfindung bezieht sich auf das Gebiet der Abgasturbolader für aufgeladene Brennkraftmaschinen.

Sie betrifft einen Verdichter eines Abgasturboladers mit einem Absorptionselement zur Aufnahme einer Axialkraft im Falle eines Verdichterradberstens.

### Stand der Technik

Für die Leistungssteigerung einer Brennkraftmaschine (Verbrennungsmotor) werden heutzutage standardmässig Abgasturbolader mit einem der Brennkammer der Brennkraftmaschine Luft für den Verbrennungsvorgang zuführenden Verdichter und einer Abgasturbine im Abgastrakt der Brennkraftmaschine eingesetzt. Mit der Aufladung der Brennkraftmaschine wird die Luft- und Kraftstoffmenge in den Zylindern erhöht und daraus ein merklicher Leistungsanstieg für die Brennkraftmaschine gewonnen. Der dafür verwendete Abgasturbolader setzt sich standardmässig aus einem Rotor, bestehend aus einem Verdichterrad und einem Turbinenrad sowie der Wellenlagerung, den strömungsführenden Gehäuseteilen (Verdichtergehäuse, Turbinengehäuse) und dem Lagergehäuse zusammen.

Wird die Brennkraftmaschine unter Volllast betrieben, und die Abgasturbine des Abgasturboladers entsprechend mit einem grossen Abgasstrom beaufschlagt, werden sehr hohe Umfangsgeschwindigkeiten an den Laufschaufelspitzen der Turbinen- sowie der Verdichterräder erreicht. Die maximale zulässige Rotordrehzahl eines Turboladers ist eine Funktion der Radgrösse, der Geometrie sowie der Festigkeitswerte der verwendeten Materialien. Generell unterliegen die rotierenden Komponenten sehr hohen Fliehkraftbelastungen und somit hohen Materialspannungen. Fehlstellen im Materialgefüge können unter Umständen zum Bersten des Verdichter- oder Turbinenrades führen, mit unvorhersehbaren Folgen für die benachbarten Gehäuse. Das initiale Versagensbild eines Verdichterrades lässt sich durch einen Schaufelbruch respektive ein mehrteiliges Nabenbersten beschreiben. Beim Schaufelbersten versagen die Schaufeln im Fussbereich des Verdichters, wobei die Radnabe intakt bleibt. Beim mehrteiligen Nabenbersten zerfällt der Nabenbereich meist in zwei bis vier Bruchstücke. Der kritischste Fall des Verdichterberstens ist der 3-teilige Nabenbruch mit drei etwa gleich grossen Bruchstücken (3x120° Sektoren). Das Berstschutzkonzept (Containmentkonzept) eines Abgasturboladers ist dahingehend auszulegen, dass sämtliche Bruchstücke, für den Fall eines mehrteiligen Nabenberstens, bei einer vorgegebenen Berstdrehzahl innerhalb der äusseren Gehäuseummantelung zurückgehalten werden. So wird bei der Konstruktion des Abgasturboladers darauf geachtet, dass die kinetische Energie des Verdichters bereits in den inneren, rotornahen Gehäusepartien durch plastische Deformation abgebaut wird und dadurch die verbleibende kinetische Energie der radial nach Aussen geschleuderten Bruchstücke nicht ausreicht, um die äussere Gehäuseummantelung zu durchdringen oder um die äusseren Gehäuseverbindungen (z.B. Schrauben) zum Versagen zu bringen.

Verschiedene Massnahmen zur Reduktion der Belastung der Gehäuseverbindung im Falle eines berstenden Verdichterrades sind bekannt.

Gemäss WO 02/090722 ist eine Sollbruchstelle in der den Strömungskanal über den Laufschaufeln des Verdichterrades radial aussen begrenzenden Gehäuseeinsatzwand vorgesehen, um im Falle eines Verdichterradberstens das axiale Wegschleudern von Gehäuseteilen oder am Verdichtergehäuse befestigten Bauteilen zu verhindern.

In EP 1 586 745 wird mittels eines Stützflansches und eines ausreichend grossen Abstands des Stützflansches zur Gehäuseeinsatzwand verhindert, dass im Falle eines berstenden Verdichterrades eine direkte axiale Impulsübertragung von wegfliegenden Verdichterradteilen auf das Lufteintrittsgehäuse stattfindet und so die Belastung der oberen Verbindungen zwischen den Gehäuseteilen reduziert und das Aufbrechen der Verbindung sowie das Austreten der Bruchstücke unterbunden.

In einer weiteren Variante gemäss GB 2 414 769 wird die axiale Belastung der Gehäuseeinsatzwand beim Nabenbersten durch die lange Dehnschrauben ausreichend aufgenommen und die geschraubte Flanschverbindung zwischen dem Verdichtergehäuse und dem Lagergehäuse hinreichend entlastet.

In der Variante nach DE 10 2004 028 133 wird eine derartige Dehnschraube mit einer zusätzlichen Passung zwischen der Schraube, der Gehäuseeinsatzwand und dem Verdichtergehäuse versehen. Durch die Passung werden die beim Bersten auftretenden Umfangskräfte aufgenommen und ein Verdrehen der Einsatzwand zum Verdichtergehäuse vermieden.

In DE 10 2005 039 820 wird die Gehäuseeinsatzwand mit Halteeinrichtung ergänzt, um dadurch die axial nach vorne geschleuderten Bruchstücke des Verdichterrades sowie der Gehäuseeinsatzwand aufzufangen respektive zu verklemmen.

Die oben beschriebenen Varianten benötigen meist grosse Bauvolumen zur Umsetzung der darin beschriebenen Merkmale. Weiter werden in einigen Varianten sehr lange Dehnpassschrauben benötigt, was höhere Anforderungen an die Genauigkeit der Gehäusefertigung, die Fertigungskosten sowie die Baumasse des Turboladers stellt. In DE 10 2005 039 820, DE 10 2004 028 133 sowie GB 2 414 769 werden die axial wirkenden Berstkräfte zuerst durch die Dehnpassschrauben aufgenommen und erst anschliessend über die Gehäusewandung in die oberen, kürzeren Schraubverbindungen zwischen Verdichter- und Lagergehäuse geleitet. Diese letztgenannten Schraubenverbindungen sind die kritischen und zu schützenden Stellen eines verdichterseitigen Berstkonzepts.

EP 2 216 517 A1 offenbart eine Berstschutzvorrichtung für Radialverdichter mit einem Biegeelement im Kraftfluss zwischen der Einsatzwandkontur und dem äusseren Verdichtergehäuse. Das Biegeelement setzt sich aus einem umlaufenden Tragring und axial gerichteten Stegen zusammen, welche axial vor und nach dem Tragring zueinander versetzt angeordnet sind. Das Biegeelement weist eine axial weiche Konstruktion auf, welche im Falle eines berstenden Verdichterrades auftretende Axialkräfte dämpfen kann.

### Kurze Darstellung der Erfindung

Die Aufgabe der Erfindung besteht darin, den Gehäuseverbund eines Verdichters eines Abgasturboladers für den Fall eines versagenden Verdichterrades berstsicher zu gestalten, indem die Gehäuseverbindungen zwischen den inneren und äusseren Verdichtergehäuseteilen und/ oder die äusseren Gehäuseverbindungen zwischen dem Verdichtergehäuse und dem Lagergehäuse vor einem Versagen geschützt werden.

Erfindungsgemäss wird dies mit einem Absorptionselement erreicht, welches rotationssymmetrisch bezüglich der Verdichterradachse ausgebildet und zur Aufnahme einer Axialkraft im Falle des Verdichterradberstens vorgesehen ist. Das Absorptionselement ist in Form eines umlaufenden Balges ausgebildet.

Der Balg des Absorptionselements bildet eine Stauchzone, welche sich im Falle des Verdichterradberstens zuerst elastisch und dann plastisch verformen lässt.

Die beim Versagen frei werdende kinetische Energie wird durch die elastische und plastische Deformation des balgförmigen Absorptionselements aufgenommen. Das erfindungsgemässe Absorptionselement sorgt damit im Falle des Verdichterradberstens auf einem möglichst kleinen Bauraum für eine hohe axiale Entlastung der Gehäuseverbindung zwischen den inneren und äusseren Verdichtergehäuseteilen und/ oder zwischen dem Verdichtergehäuse und dem Lagergehäuse.

Weitere Vorteile ergeben sich aus den abhängigen Ansprüchen.

### Kurze Beschreibung der Zeichnungen

Folgend ist anhand der Zeichnungen eine Ausführungsform des erfindungsgemässen Berstkonzepts für den Verdichter eines Abgasturboladers beschrieben. Hierbei zeigt
- Fig. 1: eine Gesamtansicht eines Abgasturboladers gemäss dem Stand der Technik mit einem Verdichter, umfassend, schematisch angedeutet, zwei unterschiedliche Luftansauggehäuse, einen Filterschalldämpfer und einen Luftansaugstutzen
- Fig. 2: ein Schnittbild eines Verdichters eines Abgasturboladers mit einem erfindungsgemäss ausgebildeten Absorptionselement eines zweiteiligen Verdichtergehäuses, und
- Fig. 3: ein Detail eines erfindungsgemäss ausgebildeten Absorptionselements eines zweiteiligen Verdichtergehäuses mit einer alternativen Ausführungsform der Verbindung zwischen den beiden Verdichtergehäuseteilen.

### Weg zur Ausführung der Erfindung

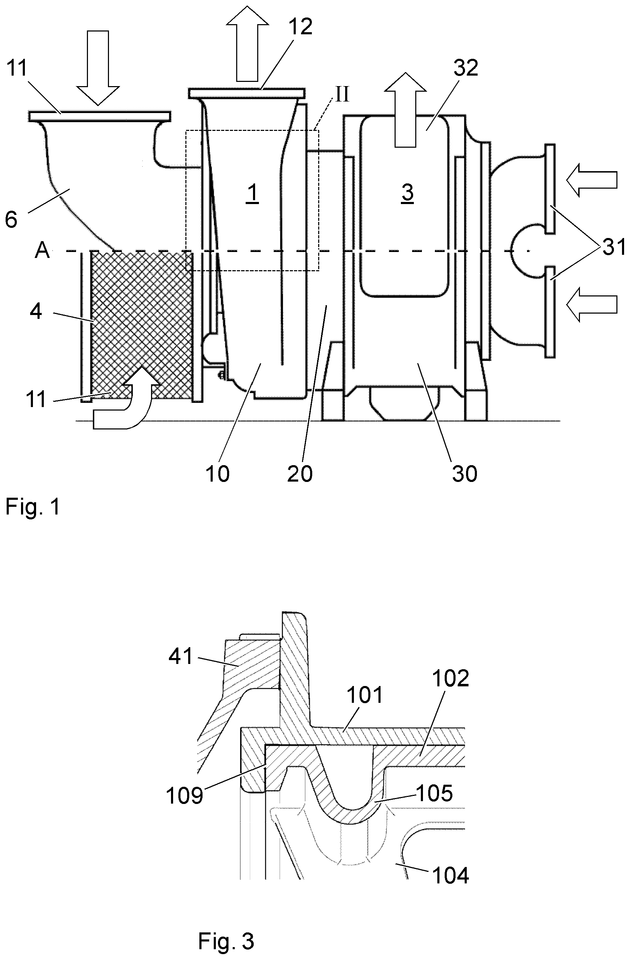

Fig. 1 zeigt eine Seitenansicht eines herkömmlichen Abgasturboladers mit Verdichter 1 und Abgasturbine 3. Der Verdichter umfasst ein im Verdichtergehäuse 10 angeordnetes Verdichterrad, die Turbine ein im Turbinengehäuse 30 angeordnetes Turbinenrad. Zwischen der Turbine und dem Verdichter ist das Lagergehäuse 20 angeordnet. Das Gehäuse der Abgasturbine 3 umfasst einen Gaseintritt 31, durch welchen das heisse Abgas auf das Turbinenrad strömt und dieses antreibt, bevor das Abgas durch den Gasaustritt 32 der Auspuffanlage zugeführt wird.

Das Turbinenrad ist an einem Ende einer um die Achse A rotierbaren Turboladerwelle angeordnet, welche im Lagergehäuse 2 drehbar gelagert ist. Am anderen Ende der Turboladerwelle befindet sich das Verdichterrad, welches durch den Lufteintritt 11 angesaugte Luft verdichtet, welche anschliessend in einem Spiral- oder Kollektorgehäuse gesammelt und über den Luftaustritt 12 den Brennkammern des Verbrennungsmotors zugeführt wird. Die angesaugte Luft kann dem Verdichter über einen rohrförmigen Ansaugstutzen 6 (in der Fig. 1 in der linken Hälfte oberhalb der Achse A angedeutet) oder über einen Schalldämpfer 4 (in der Fig. 1 in der linken Hälfte unterhalb der Achse A angedeutet) zugeführt werden. Der Schalldämpfer kann zusätzlich Filterelemente umfassen, welche das Eintreten von grösseren Partikeln in den Verdichter verhindern. In diesem Fall wird von einem Filterschalldämpfer gesprochen.

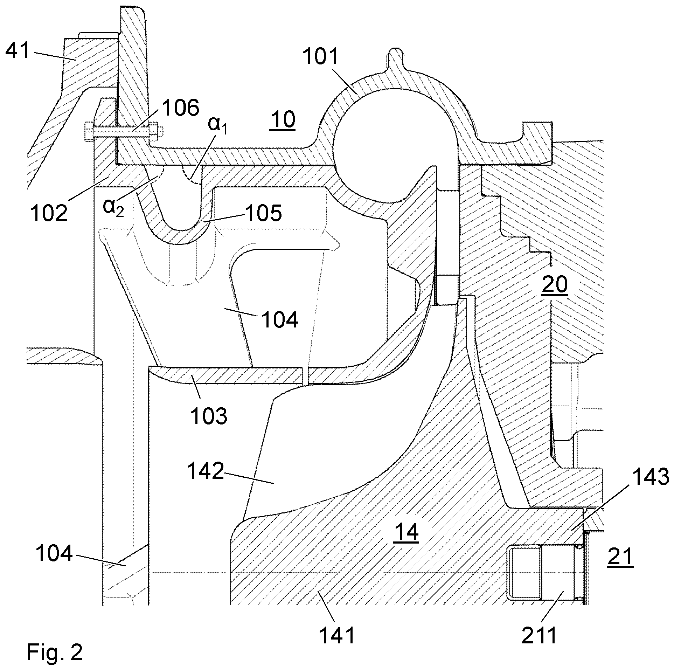

Fig. 2 zeigt einen vergrössert dargestellten Ausschnitt eines Verdichters, welcher vom grundsätzlichen Aufbau her dem Verdichter des Abgasturboladers der vorangehenden Figur entspricht. Im Innern des Verdichtergehäuses ist das Verdichterrad 14 angeordnet, welches auf einem Befestigungszapfen 211 der Turboladerwelle 21 befestigt ist. Das Verdichtergehäuse ist zweigeteilt und umfasst ein äusseres Verdichtergehäuse (Spiralgehäuse) 101 sowie ein inneres Verdichtergehäuse 102. Das dargestellte innere Verdichtergehäuse 102 ist einteilig ausgebildet, umfasst jedoch mehrere funktionelle Teilbereiche. Optional können die Teilbereiche auch als separate Gehäuseteile ausgebildet sein.

Ein erster Teilbereich des inneren Verdichtergehäuses ist die Einsatzwand 103. Beim dargestellten Radialverdichter ist die Einsatzwand im Ansaugbereich des Verdichterrades axial ausgerichtet und erfährt anschliessend eine Krümmung in die radiale Richtung. Die Einsatzwand 103 begrenzt den Strömungskanal des Verdichters, zusammen mit der Nabe 141 des Verdichterrades 14. Die Laufschaufeln 142 des Verdichterrades befinden sich im Strömungskanal. Stromabwärts des Verdichterrades begrenzt das innere Verdichtergehäuse im Diffusorbereich den Strömungskanal zusammen mit dem gegenüberliegenden Lagergehäuse. Optional ist in dem Diffusorbereich ein Leitapparat (beschaufelter Diffusor) angeordnet. Stromabwärts des Diffusors mündet der Strömungskanal in dem spiralförmigen Schneckengehäuse, welches radial aussen durch das äussere Verdichtergehäuse 101 begrenzt ist. Im Bereich des Verdichtereintritts, also unmittelbar vor oder nach den Eintrittskanten der Laufschaufeln 142 des Verdichterrades, kann die Einsatzwand 103 mit Rezirkulationsöffnungen versehen sein. Durch diese Öffnungen strömt je nach Betriebszustand bereits verdichtete Luft zurück in den Ansaugbereich. Die Rezirkulationsöffnungen sind optional als ein umlaufender Schlitz in der Einsatzwand ausgebildet, welcher die Einsatzwand in diesem Bereich teilt. In diesem Fall, oder allgemein zur Zentrierung des den Strömungskanal begrenzenden Teils des inneren Verdichtergehäuses, sind radial nach aussen verlaufende Streben 104 vorgesehen. Die Streben 104 können streng radial ausgerichtet sein, oder aber schräg zur Radialen verlaufen.

Das innere Verdichtergehäuse ist in der dargestellten Ausführungsform mittels Schrauben 106 am äusseren Verdichtergehäuse befestigt. Optional können andere kraftschlüssige Befestigungsmittel als Schrauben vorgesehen werden, oder das innere Verdichtergehäuse kann über einen Formschluss zwischen dem äusseren Verdichtergehäuse und dem Lagergehäuse festgeklemmt sein, wie in Fig. 3 dargestellt. In diesem Fall liegt das innere Verdichtergehäuse an einem Axialanschlag 109 des äusseren Verdichtergehäuses an.

Um die form- oder kraftschlüssige Verbindung zwischen dem inneren Verdichtergehäuse und dem äusseren Verdichtergehäuse im Falle des Verdichterradberstens zu entlasten, umfasst das innere Verdichtergehäuse erfindungsgemäss ein Absorptionselement in Form eines umlaufenden Balges 105. Der Balg 105 ist rotationssymmetrisch ausgebildet und verläuft entlang der zylinderförmigen Aussenseite des inneren Verdichtergehäuses. Der Balg umfasst im axial geführten Querschnitt zwei Schenkel, welche über eine Krümmung miteinander verbunden sind. Die Schenkel und die Krümmung sorgen im Falle einer zum Verdichtereintritt hin (in der Figur nach links) gerichteten Axialbelastung dafür, dass sich das innere Verdichtergehäuse erst elastisch und dann plastisch deformiert. Verlaufen die Schenkel mit unterschiedlich steilen Winkeln zur axialen Richtung, kann die Deformation in beschränktem Masse beeinflusst werden. Dabei verläuft vorteilhafterweise der die Axialkraft aufnehmende Schenkel, also derjenige Schenkel, welcher in axialer Richtung näher beim Verdichterrad (in der Figur weiter rechts) liegt, in einem steileren Winkel α₁ zur axialen Richtung als der andere Schenkel, welche die Axialkraft in Richtung der Verbindung zwischen dem inneren Verdichtergehäuse und dem äusseren Verdichtergehäuse weitergibt.

Optional kann das Absorptionselement als Teil eines separaten Gehäuseteils ausgeführt sein. In diesem Fall kann das Absorptionselement, also der umlaufende Balg, oder aber Teile davon, aus einem Material gefertigt sein, welches gegenüber dem Material des übrigen inneren Verdichtergehäuses optimierte Eigenschaften bezüglich der elastischen und/ oder plastischen Deformation, also beispielsweise eine höhere Bruchdehnung aufweist. Damit können die energieabsorbierenden Eigenschaften des Absorptionselements verstärkt werden, ohne im Bereich des übrigen, inneren Verdichtergehäuses bezüglich der Materialwahl Kompromisse eingehen zu müssen.

Optional kann das Absorptionselement zusätzlich einen zweiten oder mehrere weitere axial hintereinander angeordnete Balge umfassen.

Im Falle des Verdichterradberstens bewirken die sich lösenden Bruchstücke des Verdichterrades eine Axialkraft auf die umliegenden Gehäuseteile. Konkret werden die Bruchstücke mit einer Radial- und einer Axialkomponente gegen die Einsatzwand des inneren Verdichtergehäuses gedrückt. Die Einsatzwand übt ihrerseits eine Axialkraft auf den zylinderförmigen äusseren Bereich des inneren Verdichtergehäuses aus. Diese Axialkraft wird erfindungsgemäss vom Absorptionselement aufgenommen und zumindest teilweise durch die elastische und plastische Deformation absorbiert. Die restliche verbleibende Energie kann dann anschliessend von den Gehäuseverbindungen aufgenommen werden.

### Bezugszeichenliste

- 1: Verdichter
- 10: Verdichtergehäuse
- 101: Äusseres Verdichtergehäuse (Spiralgehäuse)
- 102: Inneres Verdichtergehäuse
- 103: Einsatzwand
- 104: Strebe
- 105: Absorptionselement in Form eines Balges
- 106: Befestigungsmittel
- 109: Axialanschlag
- 11: Lufteintritt in den Verdichter
- 12: Luftaustritt aus dem Verdichter
- 14: Verdichterrad
- 141: Nabe des Verdichterrades
- 142: Laufschaufeln des Verdichterrades
- 143: Befestigungsflansch des Verdichterrades
- 20: Lagergehäuse
- 21: Turboladerwelle
- 211: Befestigungszapfen
- 3: Abgasturbine
- 30: Turbinengehäuse
- 31: Gaseintritt in die Turbine
- 32: Gasaustritt aus der Turbine
- 4: Filterschalldämpfer
- 41: Gehäuse des Filterschalldämpfers
- 6: Luftansaugstutzen
- A: Achse des Rotors (Verdichterrad, Turbinenrad, Turboladerwelle)
- α1: Winkel des kraftaufnehmenden Schenkels des Balgs zur axialen Richtung
- α2: Winkel des kraftabgebenden Schenkels des Balgs zur axialen Richtung

## Patentansprüche

1. Verdichter eines Abgasturboladers, umfassend ein um eine Achse (A) drehbares Verdichterrad (14), ein zweigeteiltes Verdichtergehäuse mit einem äusseren Verdichtergehäuse (101) und einem inneren Verdichtergehäuse (102), wobei das innere Verdichtergehäuse (102) radial ausserhalb des Verdichterrades (14) angeordnet ist und eine Einsatzwandkontur (103) umfasst, welche zusammen mit einer Nabe (141) des Verdichterrades einen Strömungskanal begrenzt und das innere Verdichtergehäuse (102) in axialer Richtung an dem äusseren Verdichtergehäuse (101) befestigt ist, **dadurch gekennzeichnet, dass** das innere Verdichtergehäuse (102) zum Übertragen von Axialkräften von der Einsatzwandkontur (103) zur Befestigung (106, 109) am äusseren Verdichtergehäuse (101) ein zur Aufnahme einer Axialkraft im Falle des Verdichterradberstens vorgesehenes Absorptionselement in Form eines umlaufenden Balges (105) umfasst, wobei der Balg entlang einer zylinderförmigen Aussenseite des inneren Verdichtergehäuses verläuft.

2. Verdichter nach Anspruch 1, wobei der Balg im Querschnitt zwei Schenkel umfasst, welche gegenüber der axialen Richtung in ungleich grossen Winkeln (α₁, α₂) verlaufen.

3. Verdichter nach Anspruch 2, wobei der eine, die Axialkraft aufnehmende Schenkel in einem steileren Winkel (α₁) zur axialen Richtung verläuft, als der die Axialkraft abgebende Schenkel (α₂).

4. Verdichter eines Abgasturboladers nach einem der Ansprüche 1 bis 3, wobei das Absorptionselement rotationssymmetrisch bezüglich der Achse (A) ausgebildet ist.

5. Verdichter eines Abgasturboladers nach einem der Ansprüche 1 bis 3, wobei das Absorptionselement in axialer Richtung an den umlaufenden Balg (105) anschliessend, mindenstens einen zweiten, umlaufenden Balg umfasst.

6. Verdichter eines Abgasturboladers nach einem der Ansprüche 1 bis 3, wobei die Befestigung des inneren Verdichtergehäuses (102) am äusseren Verdichtergehäuse (101) mittels Befestigungsmitteln (106) erfolgt.

7. Verdichter eines Abgasturboladers nach einem der Ansprüche 1 bis 3, wobei die Befestigung des inneren Verdichtergehäuses (102) am äusseren Verdichtergehäuse (101) formschlüssig mittels Axialanschlag (109) erfolgt.

8. Verdichter eines Abgasturboladers nach einem der Ansprüche 1 bis 3, wobei das Absorptionselement Teil eines separaten Gehäuseteils ist, und dieses separate Gehäuseteil aus einem Material gefertigt ist, welches sich vom Material des übrigen inneren Verdichtergehäuses (102) unterscheidet.

9. Abgasturbolader, umfassend einen Verdichter nach einem der Ansprüche 1 bis 3.

## Claims

1. Compressor of an exhaust-gas turbocharger, comprising a compressor wheel (14) which is rotatable about an axis (A), and comprising a two-part compressor housing which has an outer compressor housing (101) and an inner compressor housing (102), wherein the inner compressor housing (102) is arranged radially outside the compressor wheel (14) and has an insert wall contour (103) which, together with a hub (141) of the compressor wheel, delimits a flow channel, and the inner compressor housing (102) is fastened in an axial direction to the outer compressor housing (101), **characterized in that**
the inner compressor housing (102) comprises, for the transmission of axial forces from the insert wall contour (103) to the fastening (106, 109) to the outer compressor housing (101), an absorption element which is provided for admitting an axial force in the event of the compressor wheel bursting and which is in the form of an encircling bellows (105), wherein the bellows runs along a cylindrical outer side of the inner compressor housing.

2. Compressor according to Claim 1, wherein the bellows comprises, in cross section, two limbs which run at unequal angles (α₁, α₂) in relation to the axial direction.

3. Compressor according to Claim 2, wherein one limb, which admits the axial force, runs at a steeper angle (α₁) in relation to the axial direction than the limb (α₂) which discharges the axial force.

4. Compressor of an exhaust-gas turbocharger according to any of Claims 1 to 3, wherein the absorption element is of rotationally symmetrical design in relation to the axis (A).

5. Compressor of an exhaust-gas turbocharger according to any of Claims 1 to 3, wherein the absorption element comprises at least one second, encircling bellows which adjoins the encircling bellows (105) in an axial direction.

6. Compressor of an exhaust-gas turbocharger according to any of Claims 1 to 3, wherein the fastening of the inner compressor housing (102) to the outer compressor housing (101) is performed using fastening means (106).

7. Compressor of an exhaust-gas turbocharger according to any of Claims 1 to 3, wherein the fastening of the inner compressor housing (102) to the outer compressor housing (101) is performed in positively locking fashion by means of an axial stop (109).

8. Compressor of an exhaust-gas turbocharger according to any of Claims 1 to 3, wherein the absorption element is part of a separate housing part, and said separate housing part is manufactured from a material which differs from the material of the rest of the inner compressor housing (102).

9. Exhaust-gas turbocharger comprising a compressor according to any of Claims 1 to 3.

## Revendications

1. Compresseur d'un turbocompresseur à gaz d'échappement, comprenant une roue de compresseur (14) pouvant tourner autour d'un axe (A), un boîtier de compresseur en deux pièces avec un boîtier de compresseur extérieur (101) et un boîtier de compresseur intérieur (102), le boîtier de compresseur intérieur (102) étant disposé radialement à l'extérieur de la roue de compresseur (14) et comprenant un contour de paroi d'insertion (103) qui délimite conjointement avec un moyeu (141) de la roue de compresseur un canal d'écoulement, et le boîtier de compresseur intérieur (102) étant fixé au boîtier de compresseur extérieur (101) dans la direction axiale,
**caractérisé en ce que** le boîtier de compresseur intérieur (102) comprend, pour la transmission de forces axiales du contour de paroi d'insertion (103) pour la fixation (106, 109) sur le boîtier de compresseur extérieur (101), un élément d'absorption sous la forme d'un soufflet périphérique (105), prévu pour recevoir une force axiale en cas d'éclatement de la roue de compresseur, le soufflet s'étendant le long d'une face extérieure cylindrique du boîtier de compresseur intérieur.

2. Compresseur selon la revendication 1, dans lequel le soufflet comprend en section transversale deux branches qui s'étendent par rapport à la direction axiale selon des angles (α₁, α₂) différents.

3. Compresseur selon la revendication 2, dans lequel ladite une branche recevant la force axiale s'étend par rapport à la direction axiale selon un angle plus raide (α₁) que la branche (α₂) délivrant la force axiale.

4. Compresseur d'un turbocompresseur à gaz d'échappement selon l'une quelconque des revendications 1 à 3, dans lequel l'élément d'absorption est réalisé en symétrie de rotation par rapport à l'axe (A).

5. Compresseur d'un turbocompresseur à gaz d'échappement selon l'une quelconque des revendications 1 à 3, dans lequel l'élément d'absorption comprend dans la direction axiale au moins un deuxième soufflet périphérique consécutif au soufflet périphérique (105).

6. Compresseur d'un turbocompresseur à gaz d'échappement selon l'une quelconque des revendications 1 à 3, dans lequel la fixation du boîtier de compresseur intérieur (102) au boîtier de compresseur extérieur (101) est effectuée à l'aide de moyens de fixation (106) .

7. Compresseur d'un turbocompresseur à gaz d'échappement selon l'une quelconque des revendications 1 à 3, dans lequel la fixation du boîtier de compresseur intérieur (102) au boîtier de compresseur extérieur (101) est effectuée par complémentarité de forme au moyen d'une butée axiale (109).

8. Compresseur d'un turbocompresseur à gaz d'échappement selon l'une quelconque des revendications 1 à 3, dans lequel l'élément d'absorption fait partie d'une partie de boîtier séparée et cette partie de boîtier séparée est fabriquée dans un matériau qui est différent du matériau du reste du boîtier de compresseur intérieur (102).

9. Turbocompresseur à gaz d'échappement, comprenant un compresseur selon l'une quelconque des revendications 1 à 3.
